# EUROPÄISCHE PATENTSCHRIFT

(11) **EP 1 784 546 B1**
(45) Veröffentlichungstag und Bekanntmachung des Hinweises auf die Patenterteilung: **11.05.2011**
(21) Anmeldenummer: 05768557.0
(22) Anmeldetag: 04.08.2005
(51) Int. Cl.: E04C 2/04, B32B 27/40

(54) **VERBUNDELEMENTE AUS POLYURETHAN-HARTSCHAUMSTOFF**
COMPOSITE ELEMENTS MADE FROM RIGID POLYURETHANE FOAM
ELEMENTS COMPOSITES EN MOUSSE DE POLYURETHANE RIGIDE

(30) Priorität: 25.08.2004 DE 102004041298
(43) Veröffentlichungstag der Anmeldung: 16.05.2007
(73) Patentinhaber: BASF SE, 67056 Ludwigshafen (DE)
(72) Erfinder: SCHMIDT, Marco, 67346 Speyer (DE); SCHMIDT, Volker, 49448 Lemförde (DE)
(86) Internationale Anmeldenummer: PCT/EP2005/008442
(87) Internationale Veröffentlichungsnummer: WO 2006/021306

(56) Entgegenhaltungen:
- EP-A- 1 321 182
- EP-A- 1 362 900
- WO-A-99/24525
- WO-A-03/016650

## Beschreibung

Die vorliegende Anmeldung betrifft Verbundelemente aus Polyurethan-Hartschaumstoff und zwei Deckschichten.

Verbundelemente aus Polyurethan-Hartschaumstoff, sogenannte Sandwichelemente, werden sowohl als Bauelemente im Wohnungsbau wie auch im Industriebau für Hallendächer und Fassaden, als Konstruktionselemente im Kühlhausbau, in Sektionaltoren, in Bürocontainern oder im Wohnwagenbau eingesetzt. Sie sind dort weit verbreitet aufgrund ihrer sehr guten Dämmeigenschaften. Es lassen sich damit energieoptimierte Bauwerke erstellen. Ihre geringe Masse bewirkt jedoch, dass die Gebäude Temperaturspitzen kaum abpuffern können, und sich sehr schnell erwärmen bzw. ebenso schnell auskühlen, das sogenannte Barackenklima.

Die Masse eines Bauwerkes speichert im Sommer die einströmende Wärme bei Tag und hält dadurch im Idealfall die Innentemperatur konstant. In der kühleren Nacht wird die gespeicherte Wärme wieder an die Außenluft abgegeben. Um ein angenehmes Raumklima auch im Sommer ohne aktive Klimatisierung zu erreichen, ist also thermische Masse des Gebäudes unerlässlich. Eine solche große thermische Masse fehlt jedoch Gebäuden aus Sandwichelementen.

In den letzten Jahren sind als neue Materialkombination in Baustoffen Latentwärmespeicher untersucht worden. Ihre Funktionsweise beruht auf der beim fest/flüssig- Phasenübergang auftretenden Umwandlungsenthalpie, die eine Energieaufnahme oder Energieabgabe an die Umgebung bei konstanter Temperatur bedeutet. Sie können damit zur Temperaturkonstanthaltung in einem festgelegten Temperaturbereich verwendet werden. Da die Latentwärmespeichermaterialien je nach Temperatur ach flüssig vorliegen, können sie nicht direkt mit Baustoffen verarbeitet werden, denn Emissionen an die Raumluft oder die Trennung vom Baustoff wären zu befürchten.

Die DE-A-101 39 171 beschreibt die Verwendung von mikroverkapselten Latentwärmespeichermaterialien in Gipskartonplatten.

Ferner lehrt die EP 1362 900 die Verwendung von intumeszierenden Überzugsmassen zu flammenkommenden Ausrüstung von Gegenständen, die mikroverkapselte organische Latentwärmespeichermaterialien enthalten.

Die ältere US-Anmeldung Ser. No. 60/573420 lehrt die Verwendung von mikroverkapselten Latentwärmespeichermaterialien in Spanplatten.

Aufgabe der vorliegenden Erfindung war es, Verbundelemente aus Polyurethan-Hartschaumstoff derart zu verbessern, dass die aus ihnen hergestellten Gebäude ein besseres Klima aufweisen.

Diese Aufgabe wird gelöst durch Verbundelement aus Polyurethan-Hartschaumstoff und zwei Deckschichten, bei denen mindestens eine Deckschicht ein mit Mikrokapseln modifizierter Formkörper ist und die Mikrokapseln ein Polymer als Kapselwand und einen Kapselkern bestehend überwiegend aus Latentwärmespeichermaterial umfassen.

Als Deckschicht kommen beliebige, flächenförmige Materialien mit ausreichender Festigkeit in Betracht. Bevorzugte Deckschichten sind Bauplatten, die beispielsweise aus Gips-, Kunststoff- oder lignocellulosehaltigen Materialien bestehen und geeignet sind, in ihrem Volumen eine ausreichende Menge Latentwärmespeichermaterial einzubinden. Bevorzugt werden Verbundelemente, bei denen mindestens eine Deckschicht ein modifizierter Formkörper aus lignocellulosehaltigem Material oder ein modifizierter Formkörper auf Basis von Gips ist. Derartige Formkörper sind in der DE-A-101 39 171, der DE-A-101 43 612 sowie der älteren US Anmeldung Ser. No. 60/573420 beschrieben.

Die nichtmodifizierte Deckschicht, auch äußere Deckschicht genannt, die sich in der Regel im Freien befindet, kann aus den üblichen für derartige Verbundelemente eingesetzten Materialien bestehen, die in der Regel wetterfest sind. Bevorzugt ist die Deckschicht eine Metallfolie und/oder -blech, eine Kunststoffplatte und/oder -folie bzw. Gewebe und dergleichen. Die Deckschicht muss nicht zwingend profiliert sein, kann auch in glatter Form oder als gestanztes, konturiertes oder geformtes Blech (z.B. Pfannenoptik) eingesetzt werden.

Für Innenanwendungen, beispielsweise bei einer Trennwand, kann ein solches Verbundelement auch aus beidseitig mit Latentwärmespeichern modifizierten Formkörpern bestehen.

Die in den erfindungsgemäß modifizierten Formkörpern enthaltenen Mikrokapseln sind Teilchen mit einem Kapselkern bestehend überwiegend, zu mehr als 90 Gew.-%, aus Latentwärmespeichermaterialien und einem Polymer als Kapselwand. Der Kapselkern ist dabei abhängig von der Temperatur fest oder flüssig. Die mittlere Teilchengröße der Kapseln (Z-Mittel mittels Lichtstreuung) beträgt 0,5 bis 100 µm, bevorzugt 1 bis 80 µm insbesondere 1 bis 50 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 90:10.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weisen die Latentwärmespeichermaterialien einen fest/flüssig Phasenübergang im Temperaturbereich von -20 bis 120°C auf. In der Regel handelt es sich bei den Latentwärmespeichern um organische, bevorzugt lipophile Substanzen.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, ÖL- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinylether wachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technische Destillate anfallen und als solche handelsüblich sind.

Weiterhin kann es vorteilhaft sein, den kapselkem-bildenden Substanzen in ihnen lösliche Verbindungen zuzugeben, um so die zum Teil bei den unpolaren Substanzen auftretende Gefrierpunktserniedrigung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicher gewünscht sind, werden die Latentwärmespeichermaterialien gewählt. Beispielsweise verwendet man für Wärmespeicher in Baustoffen in gemäßigtem Klima bevorzugt Latentwärmespeichermaterialien, deren fest/flüssig-Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C.

Bevorzugte Latentwärmespeichermaterialien sind aliphatische Kohlenwasserstoffe, besonders bevorzugt die oben beispielhaft aufgezählten. Insbesondere werden aliphatische Kohlenwasserstoffe mit 16, 17 oder 18 Kohlenstoffatomen sowie deren Gemische bevorzugt.

Als Polymer für die Kapselwand können prinzipiell die für die Mikrokapseln für Durchschreibepapiere bekannten Materialien verwendet werden. So ist es beispielsweise möglich, die Latentwärmespeichermaterialien nach den in der GB-A 870476, US 2,800,457, US 3,041,289 beschriebenen Verfahren in Gelatine mit anderen Polymeren zu verkapseln.

Bevorzugte Wandmaterialien, da sehr alterungsstabil, sind duroplastische Polymere.

Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise hochvernetzte Formaldehydharze, hochvernetzte Polyharnstoffe und hochvernetzte Polyurethane sowie hochvernetzte Methacrylsäureesterpolymere.
5

Unter Formaldehydharzen versteht man Reaktionsprodukte aus Formaldehyd mit
- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,
oder ihren Mischungen.

Als Kapselwandmaterial bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkyl- insbesondere Methylether dieser Formaldehydharze sowie die Mischungen mit diesen Formaldehydharzen. Insbesondere werden Melamin-Formaldehyd-Harze und/oder deren Methylether bevorzugt.

In den von den Durchschreibepapieren her bekannten Verfahren werden die Harze als Prepolymere eingesetzt. Das Prepolymer ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A-562 344 und EP-A-974 394 beschrieben.

Kapselwände aus Polyharnstoffen und Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendüsocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4,021,595, EP-A 0 392 876 und EP-A 0 535 384 bekannt.

Bevorzugt werden Mikrokapseln, deren Kapselwand ein hochvernetztes Methacrylsäureesterpolymer ist. Der Vernetzungsgrad wird dabei mit einem Vernetzeranteil ≥ 10 Gew.-% bezogen auf das Gesamtpolymer erzielt.

In den bevorzugten Mikrokapseln sind die Wand-bildenden Polymere aus 30 bis 100 Gew.-%, vorzugsweise 30 bis 95 Gew.-% eines oder mehrerer C₁-C₂₄-Alkylester der Acryl- und/oder Methacrylsäure als Monomere I aufgebaut. Außerdem können die Polymere bis zu 80 Gew.-%, vorzugsweise 5 bis 60 Gew.-%, insbesondere 10 bis 50 Gew.-%, eines bi- oder polyfunktionellen Monomers als Monomere II, welches in Wasser nicht löslich oder schwer löslich ist, einpolymerisiert enthalten. Daneben können die Polymere bis zu 40 Gew.%, vorzugsweise bis zu 30 Gew.% sonstige Monomere III einpolymerisiert enthalten.

Als Monomere I eignen sich C₁-C₂₄-Alkylester der Acryl- und/oder Methacrylsäure. Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Ferner ist Methacrylnitril zu nennen. Generell werden die Methacrylate bevorzugt.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens 2 nichtkonjugierte ethylenische Doppelbindungen haben. Vornehmlich kommen Divinyl- und Polyvinylmonomere in Betracht, die eine Vernetzung der Kapselwand während der Polymerisation bewirken.

Bevorzugte bifunktionelle Monomere sind die Diester von Diolen mit Acrylsäure oder Methacrylsäure, ferner die Diallyl- und Divinylether dieser Diole.

Bevorzugte Divinylmonomere sind Ethandioldiacrylat, Divinylbenzol, Ethylenglykoldimethacrylat, 1,3-Butylenglykoldimethacrylat, Methallylmethacrylamid und Allylmethacrylat. Besonders bevorzugt sind Propandiol-, Butandiol-, Pentandiol- und Hexandioldiacrylat oder die entsprechenden Methacrylate.

Bevorzugte Polyvinylmonomere sind Trimethylolpropantriacrylat und -methacrylat, Pentaerythrittriallylether und Pentaerythrittetraacrylat.

Als Monomere III kommen sonstige Monomere in Betracht, bevorzugt sind Monomere IIIa wie Styrol, α-Methylstyrol, β-Methylstyrol, Butadien, Isopren, Vinylacetat, Vinylpropionat und Vinylpyridin.

Besonders bevorzugt sind die wasserlöslichen Monomere IIIb, z.B. Acrylnitril, Methacrylamid, Acrylsäure, Methacrylsäure, Itaconsäure, Maleinsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Die zur erfindungsgemäßen Verwendung geeigneten Mikrokapseln lassen sich durch eine sogenannte in-situ-Polymerisation herstellen.

Die bevorzugten Mikrokapseln sowie ihre Herstellung sind aus der EP-A-457 154, DE-A-10 139 171, DE-A-102 30 581, EP-A-1 321 182 bekannt, auf die ausdrücklich verwiesen wird. So stellt man die Mikrokapseln in der Weise her, dass man aus den Monomeren, einem Radikalstarter, einem Schutzkolloid und der einzukapselnden lipophilen Substanz eine stabile Öl-in-Wasser-Emulsion herstellt, in der sie als disperse Phase vorliegen. Anschließend löst man die Polymerisation der Monomeren durch Erwärmung aus und steuert sie vorzugsweise durch weitere Temperaturerhöhung, wobei die entstehenden Polymere die Kapselwand bilden, welche die lipophile Substanz umschließt.

In der Regel führt man die Polymerisation bei 20 bis 100°C, vorzugsweise bei 40 bis 80°C durch. Natürlich sollte die Dispersions- und Polymerisationstemperatur oberhalb der Schmelztemperatur der lipophilen Substanzen liegen.

Nach Erreichen der Endtemperatur setzt man die Polymerisation zweckmäßigerweise noch etwa für eine Zeit von bis zu 2 Stunden fort, um Restmonomergehalte abzusenken. Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomer und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 9924525-beschrieben, vorteilhaft durch redoxinitierte Polymerisation, wie in der DE-A-4 435 423, DE-A-4419518 und DE-A-4435422 beschrieben.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann.

Bevorzugte Schutzkolloide sind wasserlösliche Polymere, da diese die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen zwischen 1 und 30 µm, vorzugsweise 3 und 12 µm, ausbilden.

In der Regel werden die Mikrokapseln in Gegenwart wenigstens eines organischen Schutzkolloids hergestellt, das sowohl anionisch als auch neutral sein kann. Auch können anionische und nichtionische Schutzkolloide zusammen eingesetzt werden. Bevorzugt verwendet man anorganische Schutzkolloide gegebenenfalls in Mischung mit organischen Schutzkolloiden.

Organische neutrale Schutzkolloide sind Cellulosederivate wie Hydroxyethylcellulose, Carboxymethylcellulose und Methylcellulose, Polyvinylpyrrolidon, Copolymere des Vinylpyrrolidons, Gelatine, Gummiarabicum, Xanthan, Natriumalginat, Kasein, Polyethylenglykole, bevorzugt Polyvinylalkohol und partiell hydrolysierte Polyvinylacetate.

Als anionische Schutzkolloide eignen sich Polymethacrylsäure, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure.

Bevorzugte anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Die anionischen Schutzkolloide werden in der Regel in Mengen von 0,1 bis 10 Gew.-% eingesetzt, bezogen auf die Wasserphase der Emulsion.

Bevorzugt werden anorganische Schutzkolloide, sogenannte Pickering-Systeme, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind.

Die Wirkweise und ihr Einsatz sind in der EP-A-1 029 018 sowie der EP-A-1 321 182 beschrieben, auf deren Inhalte ausdrücklich Bezug genommen wird.

Ein Pickering-System kann dabei aus den festen Teilchen allein oder zusätzlich aus Hiffsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Die kolloidalen Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert während der Öl-in-Wasser Emulsion mit einer Säure auf pH 2 bis 7 eingestellt wird.

Die anorganischen Schutzkolloide werden in der Regel in Mengen von 0,5 bis 15 Gew.-%, bezogen auf die Wasserphase, eingesetzt.

Im allgemeinen werden die organischen neutralen Schutzkolloide in Mengen von 0,1 bis 15 Gew.-%, vorzugsweise von 0,5 bis 10 Gew.-% eingesetzt, bezogen auf die Wasserphase.

Vorzugsweise wählt man die Dispergierbedingungen zur Herstellung der stabilen Öl-in-Wasser Emulsion in an sich bekannter Weise so, dass die Öltröpfchen die Größe der gewünschten Mikrokapseln haben.

Es werden erfindungsgemäße Verbundelemente bevorzugt, von denen mindestens eine Deckschicht ein modifizierter Formkörper aus lignocellulosehaltigem Material ist. Die Mikrokapseln lassen sich in für Formkörper aus lignocellulosehaltigen Material üblicherweise eingesetztes Leimharz einarbeiten.

Lignocellulosehaltige Materialien sind, entsprechend dem Stand der Technik, beispielsweise Holzspäne von zerspanten Rund- und Knüppelhölzern, Sägewerks- und Funierabfälle, Hobel- und Schälspäne sowie andere lignocellulosehaltige Rohmaterialien z.B. Bagasse, Flachsscheiben, Baumwollstengel, Jute, Sisal, Stroh, Flachs, Kokosfasern, Bananenfasern, Hanf und Kork. Besonders bevorzugt sind Holzfasern oder Holzspäne. Die Rohstoffe können dabei in Form von Granulaten, Mehl, oder bevorzugt Spänen, Fasern und/oder Schnitzeln vorliegen.

Als Leimharze sind Aminoplastharze, Phenolharze, Isocyanatharze und Polycarbonsäureharze bevorzugt zu nennen.

Als Aminoplastharze kommen Bindemittel auf der Grundlage von Formaldehydkondensaten des Harnstoffs oder Melamins in Betracht. Sie sind als wässrige Lösungen oder Pulver unter den Bezeichnungen Kaurit^{®} sowie Kauramin^{®} (Herst. BASF) im Handel und enthalten Harnstoff- und/oder Melamin-Formaldehyd-Vorkondensate. Mischkondensate und Kondensate, die weitere Bestandteile wie Phenol oder auch andere Aldehyde enthalten können, sind üblich. Geeignete Aminoplastharze und Phenolharze sind Harnstoff-Melamin-Formaldehydkondensate, Melamin-Harnstoff-Formaldehyd-Phenolkondensate, Phenol-Formaldehydkondensate, Phenol-Resorcin-Formaldehydkondensate, Harnstoff-Formaldehydkondensate und Melaminformaldehydkondensate sowie ihre Mischungen. Ihre Herstellung und Verwendung ist allgemein bekannt. In der Regel wird die Vorkondensation der Ausgangsstoffe bis zu einer Viskosität von 200 bis 500 mPas geführt (bezogen auf eine 66 gew.-%ige Harzlösung).

Bevorzugt werden Harnstoff- und/oder Melamin-Formaldehydharze insbesondere solche mit einem Molverhältnis von 1 Mol Harnstoff zu 1,1 bis 1,4 Mol Formaldehyd.

Bei der Verarbeitung von Aminoplastharzen erfolgt ein Übergang der löslichen und schmelzbaren Aminoplastvorkondensate in unschmelzbare und unlösliche Produkte. Bei diesem als Aushärtung bezeichneten Vorgang tritt bekanntermaßen eine durchgehende Vernetzung der Vorkondensate ein, die in der Regel durch Härter beschleunigt wird.

Als Härter können die dem Fachmann bekannten Härter für Harnstoff-, Phenol- und/oder Melamin-Formaldehyd-Harze eingesetzt werden, wie sauer reagierende und/oder säureabspaltende Verbindungen z.B. Ammonium- oder Aminsalze. In der Regel beträgt der Härteranteil in einer Leimharzflotte 1 bis 5 Gew.-% bezogen auf den Flüssigharzanteil.

Als Isocyanatharze sind alle gängigen auf Methylendiphenylenisocyanaten (MDI) basierende Harze geeignet. Sie bestehen in der Regel aus einer Mischung aus Monomeren, Polymeren und oligomeren Diisocyanaten, den sogenannten Vorkondensaten, die in der Lage sind mit der Cellulose, dem Lignin und der Feuchtigkeit des Holzes zu reagieren. Der Harzgehalt damit hergestellter Formkörper beträgt in der Regel 3-5 Gew.-% bezogen auf den Formkörper.

Geeignete Isocyanatharze sind beispielsweise als Lupranat^{®} Marken (Firma Elastogran) im Handel erhältlich.

Ferner sind als Leimharze auch Polycarbonsäureharze geeignet, die
A) ein durch radikalische Polymerisation erhaltenes Polymerisat, welches zu 5 bis 100 bevorzugt 5 bis 50 Gew.-% aus einem ethylenisch ungesättigten Säureanhydrid oder bevorzugt einer ethylenisch ungesättigten Dicarbonsäure, deren Carbonsäuregruppen eine Anhydridgruppe bilden können, (Monomere a)), und 0 - 95 bevorzugt 50 bis 95 Gew.-% Monomere b), die von den Monomeren a) verschieden sind, besteht und
B) ein Alkanolamin mit mindestens zwei Hydroxylgruppen, umfassen.

Derartige Harze werden in der EP-A-882 093 beschrieben, auf die ausdrücklich Bezug genommen wird.

Besonders bevorzugt sind Polymerisate, die als Monomere a) Maleinsäure und/oder Maleinsäureanhydrid enthalten.

Bevorzugte Monomere b) sind Acrylsäure, Methacrylsäure, Ethen, Propen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril bzw. Mischungen davon. Besonders bevorzugt sind Acrylsäure, Methacrylsäure, Ethen, Acrylamid, Styrol und Acrylnitril bzw. Mischungen davon.

Insbesondere sind solche bevorzugt, worin das Monomer b) wenigstens eine C₃-C₆-Monocarbonsäure bevorzugt Acrylsäure als Comonomer b) umfasst.

Die Polymerisate können nach üblichen Polymerisationsverfahren hergestellt werden, z.B. durch Substanz-, Emulsions-, Suspensions-, Dispersions-, Fällungs- und Lösungspolymerisation. Für alle Polymerisationsmethoden werden die üblichen Apparaturen verwendet, z.B. Rührkessel, Rührkesselkaskaden, Autoklaven, Rohrreaktoren und Kneter. Dabei wird, wie dem Fachmann geläufig, unter Ausschluss von Sauerstoff gearbeitet. Bevorzugt wird nach der Methode der Lösungs- und Emulsionspolymerisation gearbeitet. Die Polymerisation wird in Wasser, gegebenenfalls mit Anteilen bis zu 60 Gew.-% an Alkoholen oder Glykolen, als Lösungs- oder Verdünnungsmittel durchgeführt.

Wird in wässriger Lösung oder Verdünnung polymerisiert, so können die ethylenisch ungesättigten Carbonsäuren vor oder während der Polymerisation ganz oder teilweise durch Basen neutralisiert werden. Als Basen kommen beispielsweise Alkali- oder Erdalkaliverbindungen, Ammoniak, primäre, sekundäre und tertiäre Amine wie Diethanolamin und Triethanolamin, sowie mehrbasige Amine in Frage.

Besonders bevorzugt werden die ethylenisch ungesättigten Carbonsäuren weder vor noch während der Polymerisation neutralisiert. Bevorzugt wird auch nach der Polymerisation kein Neutralisierungsmittel, abgesehen vom Alkanolamin B), zugesetzt.

Die Durchführung der Polymerisation kann nach einer Vielzahl von Varianten kontinuierlich oder diskontinuierlich durchgeführt werden. Üblicherweise legt man einen Teil der Monomere gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Innerhalb eines definierten Zeitraumes werden der Radikalinitiator, weitere Monomere und sonstige Hilfsstoffe, wie Regler oder Vernetzer jeweils gegebenenfalls in einem Verdünnungsmittel zudosiert.

Bevorzugt liegen die Polymerisate A) in Form einer wässrigen Dispersion oder Lösung mit Feststoffgehalten von vorzugsweise 10 bis 80 Gew.-%, insbesondere 40 bis 65 Gew.-% vor.

Als Komponente B) werden Alkanolamine mit mindestens zwei OH-Gruppen eingesetzt, wie Diethanolamin, Triethanolamin, Diisopropanolamin, Triisopropanolamin, Methyldiethanolamin, Butyldiethanolamin und Methyldiisopropanolamin genannt. Bevorzugt ist Triethanolamin.

Zur Herstellung der Polycarbonsäureharze werden das Polymerisat A) und das Alkanolamin B) bevorzugt in einem solchen Verhältnis zueinander eingesetzt, dass das Molverhältnis von Carboxylgruppen der Komponente A) und der Hydroxylgruppen der Komponente B) 20:1 bis 1:1, bevorzugt 8:1 bis 5:1 und besonders bevorzugt 5:1 bis 1,7:1 beträgt (die Anhydridgruppen werden hierbei als 2 Carboxylgruppen berechnet).

Die Herstellung der Polycarbonsäureharze erfolgt z.B. einfach durch Zugabe des Alkanolamins zur wässrigen Dispersion oder Lösung der Polymerisate A).

Die Mikrokapseln können dem als Basis für die Formkörper dienendem Gemisch aus Holzfasern bzw. -spänen und Bindemittel auf verschiedene Weise und an verschiedenen Stellen des Fabrikationsprozesses zugesetzt werden.

Die Mikrokapseln können als Dispersion oder bevorzugt als Pulver in die Bindemittelzusammensetzung eingearbeitet werden. Dabei werden 2 bis 30 Gew.-%, bevorzugt 5 bis 15 Gew.-% Mikrokapseln bezogen auf den Formkörper eingearbeitet. Es ist jedoch ebenfalls möglich, die Mikrokapseln in einem ersten Verfahrensschritt zusammen mit den lignocellulosehaltigen Materialien zu trocknen und anschließend mit dem Leimharz thermisch zu härten.

Bevorzugte Formkörper enthalten lignocellulosehaltige Materialien sowie bezogen auf das Gewicht des Formkörpers 5 - 20 Gew.-% Leimharz, gerechnet als Feststoff, und 2 - 30 Gew.-% Mikrokapseln.

Geeignete Bindemittelzusammensetzungen enthaltend 40 - 95 Gew.-%, bevorzugt 40 - 65 Gew.-% insbesondere 50 - 60 Gew.-% Leimharz, gerechnet als Feststoff, 5-40 Gew.-%, bevorzugt 10 - 35 Gew.-%, insbesondere 20 - 30 Gew.% Mikrokapseln und gegebenenfalls Wasser bezogen auf 100 Gew.-% Bindemittelzusammensetzung.

Darüber hinaus können zusammen mit dem Leimharz für Formkörper aus lignocellulosehaltigen Materialien übliche Hilfs- und Zuschlagstoffe eingesetzt werden wie die bereits oben erwähnten Härter, Puffer, Insektizide, Fungizide, Füllstoffe, Hydrophobierungsmittel wie Silikonöle, Paraffine, Wachse, Fettseifen, Wasserretentionsmittel, Netzmittel und Flammschutzmittel wie Borate und Aluminiumhydroxid.

Die modifizierten Formkörper sind insbesondere Platten. Je nach Größe der eingesetzten lignocellulosehaltigen Partikel unterscheidet man zwischen OSB (oriented structural board) Platten, Spanplatten und mitteldichten (MDF) und hochdichten (HDF) Faserplatten. Bevorzugt wird die Bindemittelzusammensetzung für Spanholzwerkstoffe insbesondere Platten eingesetzt.

Die lignocellulosehaltigen Materialien können direkt mit den Mikrokapseln oder der Bindemittelzusammensetzung beschichtet werden. Nach einer Verfahrensvariante vermischt man die lignocellulosehaltigen Materialien mit der Bindemittelzusammensetzung und härtet diese Mischung thermisch, wobei die Bindemittelzusammensetzung 40 - 95 Gew.-% Leimharz und 5 - 40 Gew.-% Mikrokapseln mit einem Polymer als Kapselwand und einem Kapselkern bestehend überwiegend aus Latentwärmespeichermaterialien und 0 - 20 Gew.-% Wasser enthält.

Nach einer Verfahrensvariante werden den lignocellulosehaltigen Materialien 9 bis 30 Gew.-%, bevorzugt 12 bis 20 Gew.-% der wässrigen Bindemittelzusammensetzung zugesetzt, bezogen auf die Gesamtmenge aus lignocellulosehaltigen Material und Bindemittelzusammensetzung.

Die Viskosität der wässrigen Bindemittelzusammensetzung wird vorzugsweise (insbesondere bei der Herstellung von Formkörpern aus Holzfasern oder Holzspänen) auf 10 bis 10 000, besonders bevorzugt auf 50 bis 1 500 und ganz besonders bevorzugt auf 100 bis 1 000 mPa·s (DIN 53019, Rotationsviskosimeter bei 41 sec⁻¹) eingestellt.

Die Mischung aus lignocellulosehaltigen Materialien und der Bindemittelzusammensetzung kann beispielsweise bei Temperaturen von 10 bis 150°C vorgetrocknet werden und anschließend zu den Formkörpern, z.B. bei Temperaturen von 50 bis 300°C, vorzugsweise 100 bis 250°C und besonders bevorzugt 140 bis 225°C und Drücken von im allgemeinen 2 bis 200 bar, vorzugsweise 5 bis 100 bar, besonders bevorzugt 20 bis 50 bar zu den Formkörpern verpresst werden. Überraschenderweise kommt es trotz der hohen Formtemperaturen in Kombination mit den Drücken nicht zur Zerstörung der Mikrokapseln, obwohl die Formtemperaturen meist oberhalb der Erweichungstemperaturen der Kapselwandmaterialien liegen.

Die Bindemittelzusammensetzungen eignen sich insbesondere zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz wie Holzspänen und Holzfasern hergestellt werden können.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Bei der Spanplattenherstellung erfolgt die Beleimung der vorher getrockneten Späne in kontinuierlichen Mischern. Meist werden verschiedene Spanfraktionen in getrennten Mischern unterschiedlich beleimt und dann getrennt (Mehrschichtplatten) oder gemeinsam geschüttet. Die Zugabe der Mikrokapseln auf die Späne kann in wässriger Lösung vor dem Trockner in einem kontinuierlichen Mischer oder bei der Beleimung zusammen oder getrennt von dem Leim erfolgen. Auch eine Kombination der beiden Verfahren ist möglich.

Es werden bevorzugt Späne eingesetzt, deren mittlere Spandicke im Mittel bei 0,1 bis 2 mm, insbesondere 0,2 bis 0,5 mm liegt, und die weniger als 6 Gew.-% Wasser enthalten. Die Bindemittelzusammensetzung wird möglichst gleichmäßig auf die Holzspäne aufgetragen, beispielsweise indem man die Bindemittelzusammensetzung in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird gegebenenfalls kalt vorverdichtet und bei einer Temperatur von z.B. 100 bis 250°C, bevorzugt von 140 bis 225°C durch Anwendung von Drücken von üblicherweise 10 bis 750 bar zu einer maßhaltigen Platte verpresst. Die benötigten Presszeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Bei der MDF- und HDF-Plattenherstellung werden die Fasern nach dem Refiner in der Blowline beleimt. Zur Beleimung werden die Holzfasern im allgemeinen mit einem Luftstrom aufgewirbelt und die Bindemittelzusammensetzung in den so erzeugten Fasernstrom eingedüst ("Blow-Line" Verfahren). Die beleimten Fasern durchlaufen dann einen Trockner, in dem sie auf Feuchten von 7 bis 13 Gew.-% getrocknet werden. Vereinzelt werden die Fasern auch erst getrocknet und nachträglich in speziellen kontinuierlichen Mischern beleimt. Auch eine Kombination aus Blowline und Mischerbeleimung ist möglich. Die Zugabe der Mikrokapseln auf die Fasern kann in wässriger Lösung in der Blowline zusammen oder getrennt vom Leim erfolgen. Das Verhältnis Holzfasern zur Bindemittelzusammensetzung bezogen auf den Trockengehalt bzw. Feststoffgehalt beträgt üblicherweise 40:1 bis 3:1, bevorzugt 20:1 bis 4:1. Die beleimten Fasern werden in dem Fasernstrom bei Temperaturen von z.B. 130 bis 180°C getrocknet, zu einem Faservlies ausgestreut gegebenenfalls kalt vorverdichtet und bei Drücken von 20 bis 40 bar zu Platten oder Formkörpern verpresst.

Bei der OSB-Herstellung werden die Holzspäne (Strands) auf Feuchten von 1 - 4 % getrocknet, in Mittel- und Deckschichtmaterial getrennt und in kontinuierlichen Mischer getrennt beleimt. Die Zugabe der Mikrokapseln auf die Holzspäne kann in wässriger Lösung vor dem Trockner in einem kontinuierlichen Mischer, oder bei der Beleimung zusammen oder getrennt von dem Leim erfolgen. Auch eine Kombination der beiden Verfahren ist möglich.

Zur Fertigstellung der Platten werden die beleimten Holzspäne dann zu Matten geschüttet, gegebenenfalls kalt vorverdichtet und in beheizten Pressen bei Temperaturen von 170 bis 240°C zu Platten gepresst.

Auch andere Naturfaserstoffe wie Sisal, Jute, Hanf, Stroh, Flachs, Kokosfasern, Bananenfasern und andere Naturfasern können mit den Bindemitteln zu Platten und Formkörpern verarbeitet werden. Die Naturfaserstoffe können auch in Mischungen mit Kunststofffasern, z.B. Polypropylen, Polyethylen, Polyester, Polyamide oder Polyacrylnitril verwendet werden. Diese Kunststofffasern können dabei auch als Cobindemittel neben den Bindemittelzusammensetzung fungieren. Der Anteil der Kunststofffasern beträgt dabei bevorzugt weniger als 50 Gew.-%, insbesondere weniger als 30 Gew.-% und ganz besonders bevorzugt weniger als 10 Gew.%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den Bindemittelzusammensetzungen imprägniert werden, gegebenenfalls unter Zusatz eines Benetzungshilfsmittels. Die imprägnierten Matten werden dann im bindemittelfeuchten oder vorgetrockneten Zustand beispielsweise bei Temperaturen zwischen 100 und 250°C und Drücken zwischen 10 und 100 bar zu Platten oder Formteilen verpresst.

Weiterhin werden Verbundelemente bevorzugt, bei denen mindestens ein Deckschicht ein modifizierter Formkörper auf Basis von Gips ist. Bevorzugt handelt es sich bei den Formkörpern um Gipskartonplatten, wie sie in der WO 03016650 beschrieben werden. Hierfür werden die Mikrokapseln als Pulver oder als Dispersion mit dem Gips verarbeitet. Dabei werden bevorzugt 5 bis 40 Gew.-%, insbesondere 20 bis 35 Gew.-%, Mikrokapseln bezogen auf das Gesamtgewicht der Gipskartonplatte (Trockensubstanz) eingearbeitet.

Gipskartonplatten bestehen in der Regel aus einem Gipskern mit beidseitig angebrachten Kartonblättern. Sie werden üblicherweise in der Art hergestellt, dass wässriger Gipsbrei diskontinuierlich oder kontinuierlich zwischen zwei Kartonblätter auf Cellulosebasis gebracht wird, wobei Platten geformt werden. Der Gipsbrei wird wie allgemein bekannt durch kontinuierliche Zugabe und ständigem Mischen von β-Hemihydratcalciumsulfat in Wasser mit Additiven hergestellt. Die Mikrokapseln können sowohl zusammen mit dem Calciumsulfat dosiert werden, wie auch bereits als wässrige Dispersion vorliegen. Der so erhaltene Gipsbrei wird auf die Kartonblätter aufgetragen, beispielsweise gesprüht und mit Karton abgedeckt.

Während der beginnenden Aushärtung werden die Kartonplatten in einer Presse zu Streifen mit beispielsweise 1,2 - 1,25 m Breite und 9,25, 12,5, 15,0, 18,0 oder 25 mm Dicke geformt. Diese Streifen härten innerhalb weniger Minuten aus und werden in Platten geschnitten. In diesem Stadium enthalten die Platten in der Regel noch ein Drittel ihres Gewichtes als freies Wasser. Um das Restwasser zu entfernen werden die Platten einer Wärmebehandlung bei Temperaturen von etwa 250°C unterworfen. Die so erhaltenen Gipskartonplatten haben eine Dichte von 750 - 950 kg/m³.

Für Gipskartonplatten wird üblicherweise Karton mit einem Gewicht von ca. 300 g/m² eingesetzt. Kartons dieser Art werden meist in mehreren Schichten hergestellt, wobei die letzte Schicht die Deckschicht des Kartons darstellt und ein Gewicht von 10 bis 100 g/m², vorzugsweise von 30 bis 70 g/m² hat.

Anstelle von Karton aus Cellulosebasis können auch alternative, faserartige Gebilde als beidseitige Abdeckungen der erfindungsgemäßen Gipskartonplatten verwendet werden. Alternative Materialien sind Polymerfasern aus z.B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden.

Derartige Gipskartonplatten sind beispielsweise aus der US 4,810,569, US 4,195,110 und US 4,394,411 bekannt.

Eine erhöhte Haftfestigkeit auf Untergründen wie Karton kann durch Zusatz natürlicher und/oder synthetischer Polymere erzielt werden. Geeignete wasserlösliche Polymere sind: Stärke und Stärkeether, höhermolekulare Methylcellulose und andere Cellulosederivate, Guar-Gummi-Derivate, thermoplastische Dispersionspulver und Flüssigdispersionen auf Basis Vinylacetat, Ethylen-Vinylacetat, Vinylpropionat, Styrol-Butadien,

Styrolacrylat und Reinacrylat. Die zugegebene Menge der Polymere beträgt 0,1 bis 5 Gew.-% bezogen auf das Gesamttrockengewicht Gips und Latentwärmespeicher.

Es ist ferner vorteilhaft, Gipsmassen als weitere Additive Wasserretentionsmittel und/oder Verdicker hinzuzufügen. Beispiele sind Polyvinylalkohol, Cellulosederivate wie Hydroxyethylcellulose, Hydroxypropylcellulose, Carboxymethylcellulose, Polyacrylsäure und Copolymere mit Acrylsäure, wie Polyethylen-co-acrylsäure, Polymaleinsäure-co-acrylsäure, Polyisobutylen-co-acrylsäure und acrylsäurereiche Polymerdispersionen mit Styrol oder Acrylsäureestern oder Vinylacetat, wie sie als Verdicker für z.B. die Papierveredelung eingesetzt werden. Üblicherweise werden die Wasserretentionsmittel und/oder Verdicker in Mengen von 0,05 bis 2 Gew.-% bezogen auf das Gesamttrockengewicht Gips und Latentwärmespeicher eingesetzt.

Die für Verbundelemente aus Polyurethan-Hartschaumstoff eingesetzten Hartschaumstoffe sind seit langem bekannt und vielfach in der Literatur beschrieben. Ihre Herstellung erfolgt üblicherweise durch Umsetzung von organischen Polyisocyanaten mit Verbindungen mit mindestens zwei mit Isocyanatgruppen reaktiven Wasserstoffatomen, zumeist Polyolen.

Als organische Polyisocyanate c) kommen vorzugsweise aromatische mehrwertige Isocyanate in Betracht. Im einzelnen seien beispielhaft genannt 2,4- und 2,6- Toluylendiisocyanat (TDI) und die entsprechenden Isomerengemische, 4,4'- , 2,4'- und 2,2'-Diphenylmethan- diisocyanat (MDI) und die entsprechenden Isomerengemische, Mischungen aus 4,4'- und 2,4'- Diphenylmethan- diisocyanaten, Polyphenyl- polymethylen- polyisocyanate, Mischungen aus 4,4'- , 2,4'- und 2,2'- Diphenylmethan- diisocyanaten und Polyphenyl-polymethylen- polyisocyanaten (Roh- MDI) und Mischungen aus Roh- MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'- , 4,4'- Diphenylmethan- diisocyanat, Roh- MDI, 2,4- und/oder 2,6- Toluylendiisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa.s.

Als Verbindungen mit mindestens zwei gegenüber Isocyanat reaktiven Wasserstoffatomen d) kommen insbesondere Polyetheralkohole und/oder Polyesteralkohole mit OH- Zahlen im Bereich von 100 bis 1200 mgKOH/g zum Einsatz.

Die Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die Polyetheralkohole haben zumeist eine Funktionalität zwischen 2 und 8, insbesondere 3 bis 8. Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2- Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie oligomere Kondensationsprodukte aus Phenol und Formaldehyd und Mannich- Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3- , 2,4- , 3,4- und 2,6- Toluylendiamin und 4,4'- , 2,4'- und 2,2'- Diamino- diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Zu den Verbindungen mit mindestens zwei gegenüber Isocyanat reaktiven Wasserstoffatomen d) gehören auch die gegebenenfalls mitverwendeten Kettenverlängerungsmittel und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.- %, vorzugsweise 2 bis 5 Gew.- %, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Po-Iyurethane", herausgegeben von Günter Oertel, Carl- Hanser- Verlag München, 3. Auflage, 1993.

Ferner können die für die Polyurethanchemie üblichen Flammschutzmittel zum Einsatz kommen sowie die in der DE-A-101 24 333 beschrieben Substanzen.

Die Polyurethan-Hartschaumstoffe werden üblicherweise in Anwesenheit von Treibmitteln, Katalysatoren und Zellstabilisatoren sowie, falls erforderlich weiteren Hilfs- und/oder Zusatzstoffen durchgeführt, die allgemein in der Polyurethanchemie bekannt sind und in der DE-A-101 24 333 beschrieben werden, auf die ausdrücklich verwiesen wird. Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz. Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl- Hanser- Verlag München, 1. Auflage, 1966, 2. Auflage, 1983 und 3. Auflage, 1993.

Mit Hilfe des Polyurethan-Hartschaumstoffes kann ein Sandwichelement für die Außenanwendung sowohl kontinuierlich wie auch diskontinuierlich hergestellt werden, welches als Konstruktionsmerkmal auf der einen Seite eine herkömmliche Deckschicht und auf der gegenüberliegenden Seite eine mit Latentwärmespeichermaterial erfindungsgemäß modifizierte Deckschicht aufweist.

Ebenso kann ein Sandwichelement für die Innenanwendung sowohl kontinuierlich wie auch diskontinuierlich hergestellt werden, welches als Konstruktionsmerkmal auf beiden Seiten mit Latentwärmespeichermaterialien erfindungsgemäß modifizierte Deckschichten aufweist.

Die Polyurethan- Hartschaumstoffe können diskontinuierlich oder kontinuierlich mit Hilfe bekannter Mischvorrichtungen hergestellt werden. Bevorzugt werden die erfindungsgemäßen Verbundelemente aus Hartschaumstoffe auf kontinuierlich arbeitenden Doppelbandanlagen hergestellt. Hier werden mit einer Hochdruckmaschine die Polyol- und Isocyanatkomponente dosiert und in einem Mischkopf vermischt. Dem Polyolgemisch können zuvor mit separaten Pumpen Katalysatoren und /oder Treibmittel zudosiert werden. Die Ausgangskomponenten werden zumeist bei einer Temperatur von 15 bis 35°C, vorzugsweise von 20 bis 30°C gemischt. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können die erfindungsgemäßen Verbundelemente, sogenannte Sandwichelemente, auch mit unterschiedlichen Deckschichten hergestellt werden.

Die Dicke der erfindungsgemäßen Verbundelemente liegt üblicherweise zwischen 20 und 300 mm, der übliche Dichtebereich des Polyurethan-Hartschaumstoffes zur Herstellung dieser Formkörper ist 10 bis 60 kg/m³, vorzugsweise 30 - 50 kg/m³ (Kunststoffhandbuch, 3. Auflage, Seite 150).

Das Reaktionsgemisch kann mit Hoch- oder Niederdruckdosiermaschinen auch in geschlossene Stützwerkzeuge (z.B. Pressenformen) gegossen werden. Nach dieser Technologie werden beispielsweise diskontinuierlich erfindungsgemäße Verbundelemente gefertigt.

Die Verbundelemente ermöglichen die Vermeidung von Barackenklima. Die mit ihnen hergestellten Gebäude zeigen neben guter Wärmedämmung eine deutliche Verbesserung des Temperaturverlaufs und damit des Energieverbrauches.

Die nachfolgenden Beispiele sollen die Erfindungen näher beschreiben:

### Beispiel 1

Es wurde ein Sandwichelement hergestellt, welches aus einer profilierten Stahldeckschicht mit Dicke 0,6 mm (entspricht der Außenseite), dem Polyurethan-Hartschaum-System Elastopor® (Firma Elastogran, Mischungsverhältnis Polyolkomponente A : Isocyanatkomponente B = 100:106) und einer mit Latentwärmespeicher modifizierten Gipsbauplatte (15 mm Dicke, glasfaserarmiert, enthaltend 30 Gew.-% mikroverkapseltes Latentwärmespeichermaterial = 3 kg PCM/m², entspricht Rauminnenseite) besteht. Die Abmessungen dieses Formkörpers betrugen 2000 mm x 1150 mm x 100 mm. Die Kern-Rohdichte des Schaumes lag bei 36,4 kg/m³ mit einer Wärmeleitfähigkeit von ca. 23 mW/mK. Die Wärmekapazität der gipshaltigen Innenschicht im Bereich des Schmelzpunktes betrug 330 kJ/m². Damit entsprach die Wärmeleitfähigkeit des erfindungsgemäßen Sandwichelements der eines konventionellen Sandwichelements (Metall/PU/Metall), wohingegen die Wärmekapazität des erfindungsgemäßen Sandwichelements mit 330 kJ/m² deutlich über den bei 0,67kJ/m² eines konventionellen liegt. (Die spez. Wärmekapazität einer Stahlschicht beträgt 0,48 kJ/kgK. Es wird ein Temperaturbereich von 3 K betrachtet.)

### Beispiel 2

Des weiteren wurde ein Sandwichelement gemäß Beispiel 1 hergestellt, welches aus einer profilierten Stahldeckschicht, dem oben beschriebenen Polyurethan-Hartschaumsystem und einer konventionellen Spanplatte (Dicke 19 mm) bestand. Die Abmessungen dieses Formkörpers betrugen 2700 x 1170 x 120 mm. Hiermit wurde die prinzipielle Machbarkeit einer solchen Materialkombination gezeigt.

Analog lassen sich mit PCM-haltigen Spanplatten erfindungsgemäße Sandwichelemente herstellen.

Mit diesen Versuchen wurde gezeigt, dass Sandwichelemente herstellbar sind, welche direkt eine hohe thermische Speicherfähigkeit mit hoher Dämmleistung kombinieren.

## Patentansprüche

1. Verbundelement aus Polyurethan-Hartschaumstoff und zwei Deckschichten, **dadurch gekennzeichnet, dass** mindestens eine Deckschicht ein mit Mikrokapseln modifizierter Formkörper ist und die Mikrokapseln ein Polymer als Kapseiwand und einen Kapselkern bestehend überwiegend aus Latentwärmespeichermaterial umfassen.

2. Verbundelement nach Anspruch 1, **dadurch gekennzeichnet, dass** mindestens eine Deckschicht ein modifizierter Formkörper aus lignocellulosehaltigem Material ist.

3. Verbundelement nach Anspruch 1, **dadurch gekennzeichnet, dass** mindestens eine Deckschicht ein modifizierter Formkörper auf Basis von Gips ist.

4. Verbundelement nach einem der Ansprüche 1 bis 3, **dadurch gekennzeichnet, dass** das Latentwärmespeichermaterial eine lipophile Substanz mit einem fest/flüssig Phasenübergang im Temperaturbereich von -20 bis 120°C ist.

5. Verbundelement nach einem der Ansprüche 1 bis 4, **dadurch gekennzeichnet, dass** das Latentwärmespeichermaterial eine aliphatische Kohlenwasserstoffverbindung ist.

6. Verbundelement nach einem der Ansprüche 1 bis 5, **dadurch gekennzeichnet, dass** die Kapselwand ein hochvernetztes Methacrylsäureesterpolymer ist.

7. Verbundelement nach einem der Ansprüche 1 bis 6, **dadurch gekennzeichnet,**
**dass** die Kapselwand aufgebaut ist aus
| | |
|---|---|
| 30 bis 100 Gew.-% | eines oder mehrerer C₁-C₂₄-Alkylester der Acryl- und/oder Methacrylsäure (Monomere I), |
| 0 bis 80 Ges.-% | eines bi- oder polyfunktionellen Monomers (Monomere II), welches in Wasser nichtlöslich oder schwer löslich ist und |
| 0 bis 40 Ges.-% | sonstige Monomere (Monomer III) |
jeweils bezogen auf das Gesamtgewicht der Monomere.

8. Verbundelement nach einem der Ansprüche 1 bis 7, **dadurch gekennzeichnet, dass** die Mikrokapseln durch Erwärmen einer Öl-in-Wasser-Emulsion, in der die Monomere, ein Radikalstarter und das Latentwärmespeichermaterial als disperse Phase vorliegen, erhältlich sind.

9. Verbundelement nach einem der Ansprüche 1, 2 oder 4 bis 8, **dadurch gekennzeichnet, dass** der Formkörper ein lignocellutosehaltiges Material enthält sowie ein Leimharz ausgewählt unter Aminoplastharzen, Phenolharzen, Isocyanatharzen und Polycarbonsäureharzen.

10. Verbundelement nach Anspruch 9, **dadurch gekennzeichnet, dass** das Leimharz ein Harnstoff und/oder Melamin-Formaldehydharz ist.

11. Verbundelement nach einem der Ansprüche 1, 2 oder 4 bis 10, **dadurch gekennzeichnet, dass** der Formkörper ein lignocellulosehaltiges Material enthält sowie bezogen auf das Gewicht des Formkörpers
| | |
|---|---|
| 5 - 20 Gew.-% | Leimharz, gerechnet als Feststoff, und |
| 2 - 30 Gew.% | Mikrokapseln mit einem Polymer als Kapselwand und einem Kapselkern bestehend überwiegend aus Latentwärmespei-chermaterial. |

12. Verfahren zur Herstellung der Verbundelemente gemäß den Ansprüchen 1 - 11, indem man sie auf kontinuierlich arbeitenden Doppelbandanlagen herstellt.

13. Verwendung der Verbundelemente gemäß den Ansprüchen 1 - 11 als Bauelemente.

## Claims

1. A composite element composed of rigid polyurethane foam and of two outer layers, wherein at least one outer layer is a molding modified with microcapsules, and the microcapsules comprise a polymer as capsule wall and a capsule core composed mainly of latent-heat-accumulator material.

2. The composite element according to claim 1, wherein at least one outer layer is a modified molding composed of lignocellulose-containing material.

3. The composite element according to claim 1, wherein at least one outer layer is a modified molding based on gypsum plaster.

4. The composite element according to any of claims 1 to 3, wherein the latent-heat-accumulator material is a lipophilic substance with a solid/liquid phase transition in the temperature range from -20 to 120°C.

5. The composite element according to any of claims 1 to 4, wherein the latent-heat-accumulator material is an aliphatic hydrocarbon compound.

6. The composite element according to any of claims 1 to 5, wherein the capsule wall is a highly crosslinked methacrylate polymer.

7. The composite element according to any of claims 1
to 6, wherein the capsule wall is composed of
| | |
|---|---|
| from 30 to 100% by weight of one or more C₁- | C₂₄-alkyl esters of acrylic and/or methacrylic acid (monomers I), |
| from 0 to 80% by weight of a bi- or | polyfunctional monomer (monomers II), which is insoluble or sparingly soluble in water, and |
| from 0 to 40% by weight of other monomers | (monomer III), |
based in each case on the total weight of the monomers.

8. The composite element according to any of claims 1 to 7, wherein the microcapsules are obtainable via heating of an oil-in-water emulsion comprising the monomers, a free-radical initiator, and the latent-heat-accumulator material as disperse phase.

9. The composite element according to any of claims 1, 2, or 4 to 8, wherein the molding comprises a lignocellulose-containing material and an adhesive resin selected from aminoplastic resins, phenolic resins, isocyanate resins, and polycarboxylic acid resins.

10. The composite element according to claim 9, wherein the adhesive resin is a urea- and/or melamine-formaldehyde resin.

11. The composite element according to any of claims 1, 2, or 4 to 10, wherein the molding comprises a lignocellulose-containing material and, based on the weight of the molding,
| | |
|---|---|
| from 5 to 20% by weight | of adhesive resin, calculated as solid, and |
| from 2 to 30% by weight | of microcapsules with a polymer as capsule wall and with a capsule core composed mainly of latent-heat-accumulator material. |

12. A process for producing the composite elements according to claims 1-11, by producing them on continuous twin-belt systems.

13. The use of the composite elements according to claims 1-11 as structural elements.

## Revendications

1. Élément composite à base de mousse rigide de polyuréthanne et de deux couches de recouvrement, **caractérisée en ce qu'**au moins une couche de recouvrement est un corps moulé modifié avec des microcapsules et les microcapsules comprennent un polymère en tant que paroi de capsule et un noyau de capsule consistant essentiellement en matériau accumulateur de chaleur latente.

2. Élément composite selon la revendication 1, **caractérisé en ce qu'**au moins une couche de recouvrement est un corps moulé modifié à base de matériau lignocellulosique.

3. Élément composite selon la revendication 1, **caractérisé en ce qu'**au moins une couche de recouvrement est un corps moulé modifié à base de plâtre.

4. Élément composite selon l'une quelconque des revendications 1 à 3, **caractérisé en ce que** le matériau accumulateur de chaleur latente est une substance lipophile ayant une transition de phase solide/liquide dans la plage de température de -20 à 120°C.

5. Élément composite selon l'une quelconque des revendications 1 à 4, **caractérisé en ce que** le matériau accumulateur de chaleur latente est un composé de type hydrocarbure aliphatique.

6. Élément composite selon l'une quelconque des revendications 1 à 5, **caractérisé en ce que** la paroi de capsule est un polymère d'ester d'acide méthacrylique hautement réticulé.

7. Élément composite selon l'une quelconque des revendications 1 à 6, **caractérisé en ce que** la paroi de capsule est constituée de
| | |
|---|---|
| 30 à 100 % en poids | d'un ou plusieurs esters alkyliques en C₁-C₂₄ de l'acide acrylique et/ou de l'acide méthacrylique (monomère I), |
| 0 à 80% en poids | d'un monomère bi- ou poly-fonctionnel (monomère II), qui est insoluble ou difficilement soluble dans l'eau et |
| 0 à 40 % en poids | d'autres monomères (monomère III) |
chaque fois par rapport au poids total des monomères.

8. Élément composite selon l'une quelconque des revendications 1 à 7, **caractérisé en ce que** les microcapsules peuvent être obtenues par chauffage d'une émulsion huile-dans-eau, dans laquelle sont présents en tant que phase dispersée les monomères, un amorceur de radicaux et le matériau accumulateur de chaleur latente.

9. Élément composite selon l'une quelconque des revendications 1, 2 ou 4 à 8, **caractérisé en ce que** le corps moulé contient un matériau lignocellulosique ainsi qu'une résine de collage choisie parmi des résines de type aminoplaste, des résines phénoliques, des résines de type isocyanate et des résines de type poly(acide carboxylique).

10. Élément composite selon la revendication 9, **caractérisé en ce que** la résine de collage est une résine urée- et/ou mélamine-formaldéhyde.

11. Élément composite selon l'une quelconque des revendications 1, 2 ou 4 à 10, **caractérisé en ce que** le corps moulé contient un matériau lignocellulosique ainsi que, par rapport au poids du corps moulé
| | |
|---|---|
| 5-20 % en poids | de résine de collage, calculé en tant que matière solide, et |
| 2-30 % en poids | de microcapsules comportant un polymère en tant que paroi de capsule et un noyau de capsule consistant essentiellement en matériau accumulateur de chaleur latente. |

12. Procédé pour la production des éléments composites selon les revendications 1 - 11, par production de ceux-ci sur des unités à double bande fonctionnant en continu.

13. Utilisation des éléments composites selon les revendications 1 - 11 en tant qu'éléments de construction.
